(19) Europäisches Patentamt / European Patent Office / Office européen des brevets

(11) **EP 2 485 383 A1**

(12) **EUROPEAN PATENT APPLICATION**
published in accordance with Art. 153(4) EPC

(43) Date of publication:
**08.08.2012 Bulletin 2012/32**

(51) Int Cl.:
*H02M 7/48* (2007.01)

(21) Application number: **10818687.5**

(22) Date of filing: **08.09.2010**

(86) International application number:
**PCT/JP2010/065378**

(87) International publication number:
**WO 2011/037011 (31.03.2011 Gazette 2011/13)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **28.09.2009 JP 2009222570**

(71) Applicant: **Yanmar Co., Ltd.**
**Osaka 530-8311 (JP)**

(72) Inventor: **MOTEGI, Shinichi**
**Osaka-shi**
**Osaka 530-0013 (JP)**

(74) Representative: **Harland, Linda Jane**
**Reddie & Grose**
**16 Theobalds Road**
**London**
**WC1X 8PL (GB)**

(54) **PULSE-PATTERN GENERATING CONFIGURATION FOR THREE-PHASE CURRENT TYPE POWER CONVERTER**

(57)    A pulse pattern generating configuration for a three-phase current source electric power converter is provided that ensures a minimal switching loss regardless of the level of power factor, and thus improves the electric power conversion efficiency.

When an inter-line voltage non-maximum phase (U-phase) and a line current command value maximum phase (U-phase) match one another, in one modulation period T, a separation time T1 is established to separate, in time, switching pulses of two phases (V-phase, and W-phase) other than the line current command value maximum phase, and a short-circuit pulse SP is disposed in the line current command value maximum phase (U-phase). When the inter-line voltage non-maximum phase (V-phase or W-phase) and the line current command value maximum phase (U-phase) do not match one another, in the one modulation period T, the switching pulses of the two phases (V-phase and W-phase) other than the line current command value maximum phase are disposed next to one another in time, and the short-circuit pulse SP is disposed in the inter-line voltage non-maximum phase (V-phase or W-phase) or in the line current command value maximum phase (U-phase).

FIG.1

EP 2 485 383 A1

**Description**

Technical Field

The present invention relates to a pulse pattern generating configuration that generates pulse patterns with respect to a three-phase current source electric power converter, which converts electric power by pulse-width modulation and includes phases each having upper and lower arms of reverse-blocking switching elements.

Background Art

Conventional three-phase current source electric power converters each include phases each having upper and lower arms of reverse-blocking switching elements, and convert electric power by pulse-width modulation. An example of such conventional three-phase current source electric power converter is application to a three-phase current source high-power-factor rectifier (as proposed in non-patent document 1).

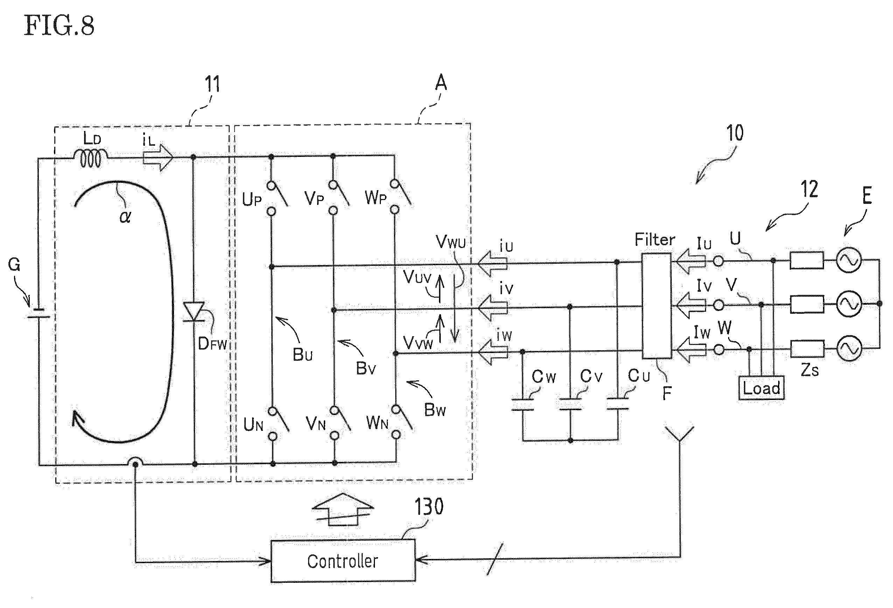

FIG. 8 is a schematic circuit diagram of a three-phase current source electric power converting system 10 disclosed in non-patent document 1.

The three-phase current source electric power converting system 10 shown in FIG. 8 includes U, V, and W, which are respectively U-phase, V-phase, and W-phase. The U-phase, the V-phase, and the W-phase each include upper and lower arms ($U_P$, $U_N$), upper and lower arms ($V_P$, $V_N$), and upper and lower arms ($W_P$, $W_N$). The upper and lower arms ($U_P$, $U_N$), the upper and lower arms ($V_P$, $V_N$), and the upper and lower arms ($W_P$, $W_N$) are reverse-blocking switching elements. The three-phase current source electric power converting system 10 includes a three-phase current source electric power converter A, which converts electric power by pulse-width modulation, a direct-current side circuit 11 of the electric power converter A, an alternating-current side circuit 12 of the electric power converter A, and a controller 130, which assumes overall control of the electric power converting system 10.

The electric power converter A includes three pairs of arms $B_U$, $B_V$, and $B_W$, which are respectively of the U-phase U, the V-phase V, and the W-phase W. The pairs of arms $B_U$, $B_V$, and $B_W$ are coupled in parallel to each other. In the pairs of arms $B_U$, $B_V$, and $B_W$ respectively of the U-phase U, the V-phase V, and the W-phase W, the upper arms $U_P$, $V_P$, and $W_P$ respectively of the U-phase U, the V-phase V, and the W-phase W are respectively coupled in series to the lower arms $U_N$, $V_N$, and $W_N$ respectively of the U-phase U, the V-phase V, and the W-phase W. The upper arms $U_P$, $V_P$, and $W_P$ respectively of the U-phase U, the V-phase V, and the W-phase W, and the lower arms $U_N$, $V_N$, and $W_N$ respectively of the U-phase U, the V-phase V, and the W-phase W are reverse-blocking switching elements.

The alternating-current side circuit 12 of the electric power converter A is coupled with a three-phase electric power system E and a load "Load". Through three-phase lines U, V, and W respectively of the U-phase, the V-phase, and the W-phase, the three-phase electric power system E and the load "Load" are coupled between the upper arms $U_P$, $V_P$, and $W_P$ and the lower arms $U_N$, $V_N$, and $W_N$, of the respective pairs of arms $B_U$, $B_V$, and $B_W$. As used herein, the term upper arms refers to the group of arms ($U_P$, $V_P$, and $W_P$) through which current flows into the three-phase current source electric power converter from the direct-current side, while the term lower arms refers to the group of arms ($U_N$, $V_N$, and $W_N$) through which current flows out of the three-phase current source electric power converter to the direct-current side.

The lines of the U-phase U, the V-phase V, and the W-phase W are respectively coupled in parallel to capacitors $C_U$, $C_V$, and $C_W$. The U, V, and W lines are coupled to a filter circuit F.

The direct-current side circuit 11 has an input side coupled to a direct current power supply G and an output side coupled to the electric power converter A. The direct-current side circuit 11 includes an inductor $L_D$ coupled in series to the output side of the direct current power supply G and the input side of the electric power converter A.

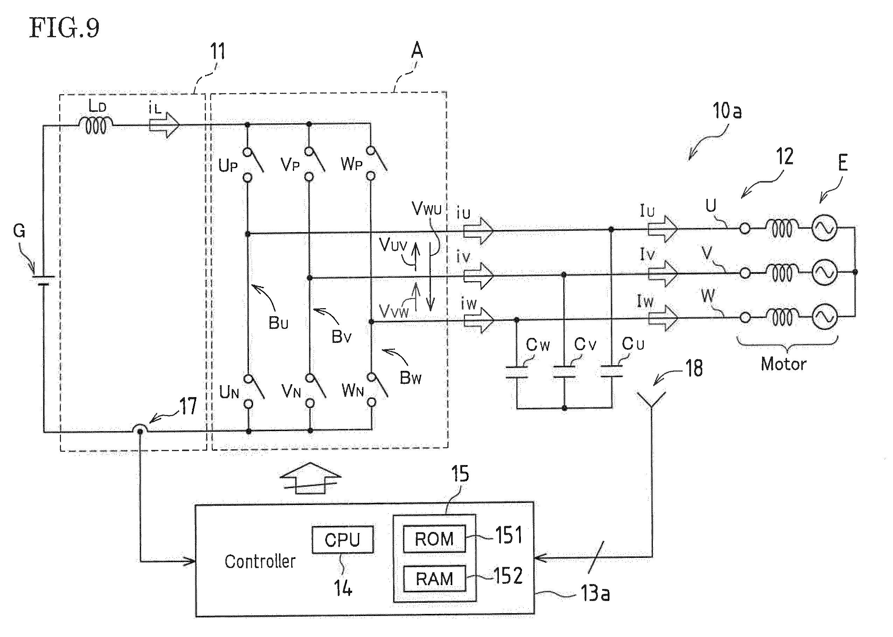

In FIG. 8, reference numeral $i_L$ denotes the current in the direct-current side, while reference numerals $i_U$, $i_V$, and $i_W$ respectively denote the alternating-current side line currents of the U-phase U, the V-phase V, and the W-phase W of the electric power converter A. Reference numerals $I_U$, $I_V$, and $I_W$ respectively denote the alternating-current side line currents of the U-phase U, the V-phase V, and the W-phase W of the three-phase electric power system E side (load "Load" side). This applies to FIG. 9 through FIG. 11, described later.

The electric power converter A shown in FIG. 8 is intended to be used as a three-phase current source high-power-factor rectifier (converter) that converts, at high-power-factor (at approximately 100% power factor), electric power from the alternating-current side to the direct-current side in accordance with instructions from the controller 130. In view of facilitated determination of switching pulses with respect to the electric power converter A, the direct-current side circuit 11 further includes a diode $D_{FW}$, which is coupled in parallel to the direct current power supply G between the inductor $L_D$ and the electric power converter A.

In common three-phase current source electric power converting systems without the diode $D_{FW}$ shown in FIG. 8 or like elements, the amount of current usually differs between the direct-current side and the alternating-current side. This necessitates a recirculation loop through which to recirculate (short-circuit) the current on the direct-current side even during absence of a switching action dedicated to power conversion. In order to ensure a recirculation loop, a short-circuit pulse is generated by another switching action executed during absence of the switching action dedicated to power conversion.

In this respect, the three-phase current source electric power converting system 10 shown in FIG. 8 includes the diode $D_{FW}$ coupled in parallel to the direct current power supply G between the inductor $L_D$ and the electric power converter A. The diode $D_{FW}$ ensures a recirculation loop $\alpha$ without generating a short-circuit pulse during absence of the switching action dedicated to power conversion. That is, the diode $D_{FW}$ also functions as a short-circuit element to ensure a recirculation loop through which to recirculate (short-circuit) the current on the direct-current side.

Related Art Documents

Non-patent Documents

Non-patent document 1: Nishida and A. Maeda, "A Simplified Discontinuous-Switching-Modulation for Three-Phase Current source PFC-Converters and Experimental Study for the Effects," Proc. IEEE APEC '96, Vol. 2, pp. 552-558, 1996.

Summary of the Invention

Problems to be Solved by the Invention

Unfortunately, since the three-phase current source electric power converting system 10 shown in FIG. 8 includes the diode $D_{FW}$, the electric power converter A is limited to application to a three-phase current source high-power-factor converter, which is for high-power-factor (at approximately 100% power factor) conversion of electric power from the alternating-current side to the direct-current side. Thus, the electric power converter A is not applicable to a low power factor three-phase current source converter or a low power factor three-phase current source inverter.

Removing the diode $D_{FW}$ makes the electric power converter A applicable to a low power factor three-phase current source electric power converter or a low power factor three-phase current source inverter. However, during absence of the switching action dedicated to electric power conversion, another switching action involving pulse-width modulation (specifically, three-phase modulation or two-phase modulation) is executed to generate a short-circuit pulse so as to ensure a recirculation loop.

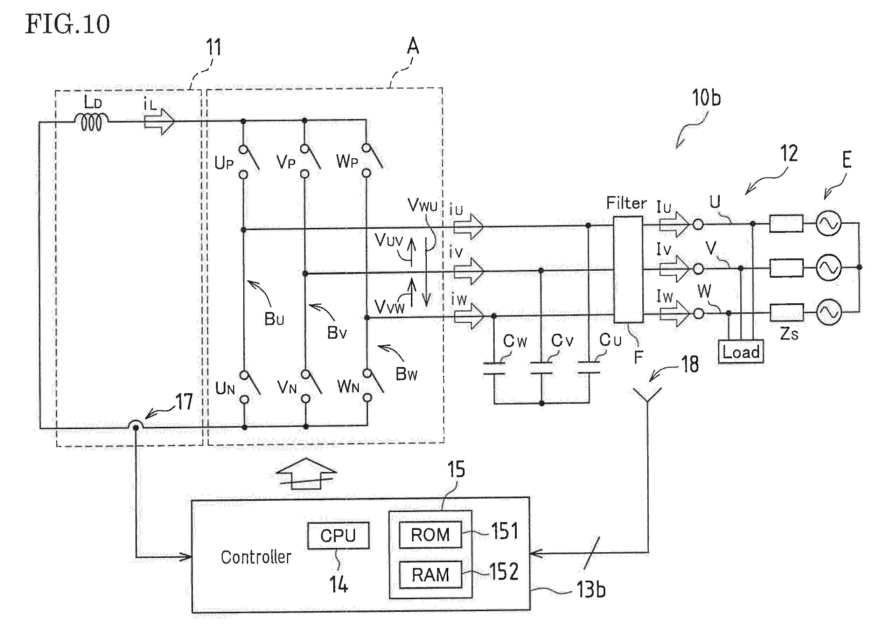

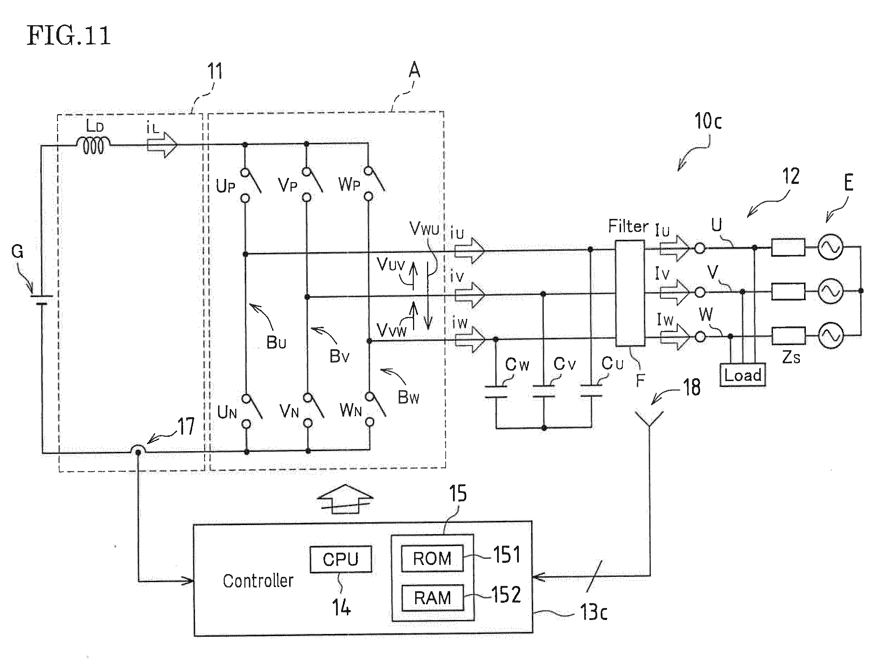

FIGs. 9 to 11 are schematic circuit diagrams respectively of three-phase current source electric power converting systems 10a to 10c, where the electric power converter A is used as a three-phase current source inverter. FIG. 9 shows the three-phase current source electric power converting system 10a, illustrating an example of driving a motor E, which replaces the three-phase electric power system E and the load "Load". FIG. 10 shows the three-phase current source electric power converting system 10b, illustrating an example in which the electric power converter A is used as a Static Var Generator (SVG) or an Active Power Filter (APF) with a three-phase current source inverter. FIG. 11 shows the three-phase current source electric power converting system 10c, illustrating an example in which a system interconnection operation is executed.

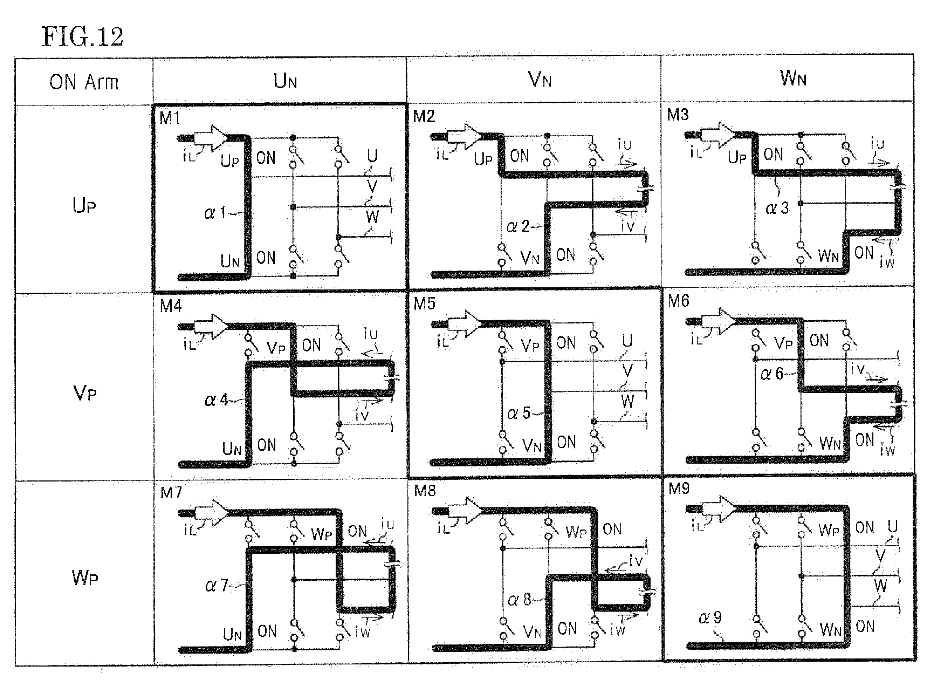

FIG. 12 is a table of current paths $\alpha1$ to $\alpha9$ associated with ON arm combinations (switching action modes M1 to M9) in the electric power converter A. In each of the ON arm combinations, one of the upper arms $U_P$, $V_P$, and $W_P$ respectively of the U-phase U, the V-phase V, and the W-phase W is on, and one of the lower arms $U_N$, $V_N$, and $W_N$ respectively of the U-phase U, the V-phase V, and the W-phase W is on.

In FIGs. 8 to 12, the direction of the current $i_L$ on the direct-current side flowing out to the electric power converter A is assumed the positive direction. In FIG. 8, the positive direction is the direction in which the alternating-current side line currents $i_U$, $i_V$, and $i_W$ respectively of the U-phase U, the V-phase V, and the W-phase W flow from the three-phase electric power system E to the electric power converter A. In FIGs. 9 to 12, the positive direction is the direction in which the alternating-current side line currents $i_U$, $i_V$, and $i_W$ respectively of the U-phase U, the V-phase V, and the W-phase W flow from the electric power converter A to the motor E or the three-phase electric power system E. In the table of FIG. 12, the current paths $\alpha1$, $\alpha5$, and $\alpha9$, which are respectively in the action modes M1, M5, and M9 as enclosed by bold frames, indicate recirculation loops through which the current is recirculated (short-circuited) on the direct-current side.

Controllers 13a to 13c each include a Central Processing Unit (CPU) 14 and a memory 15. The memory 15 includes a Read Only Memory (ROM) 151 and a Random Access Memory (RAM) 152, and stores various control programs, necessary functions, and tables.

Each of the controllers 13a to 13c has its CPU 14 read a switching control program from the memory 15 and executes the read switching control program. In this manner, switching control is executed with respect to the switching elements of the upper and lower arms ($U_P$, $U_N$), the upper and lower arms ($V_P$, $V_N$), and the upper and lower arms ($W_P$,

$W_N$) of the three-phase current source electric power converter A.

Specifically, as shown in FIG. 12, in the first action mode M1, the upper arm $U_P$ of the U-phase U and the lower arm $U_N$ of the U-phase U are turned on to form the current path (recirculation loop) $\alpha$1. In the second action mode M2, the upper arm $U_P$ of the U-phase U and the lower arm $V_N$ of the V-phase V are turned on to form the current path $\alpha$2. In the third action mode M3, the upper arm $U_P$ of the U-phase U and the lower arm $W_N$ of the W-phase W are turned on to form the current path $\alpha$3.

In the fourth action mode M4, the upper arm $V_P$ of the V-phase V and the lower arm $U_N$ of the U-phase U are turned on to form the current path $\alpha$4. In the fifth action mode M5, the upper arm $V_P$ of the V-phase V and the lower arm $V_N$ of the V-phase V are turned on to form the current path (recirculation loop) $\alpha$5. In the sixth action mode M6, the upper arm $V_P$ of the V-phase V and the lower arm $W_N$ of the W-phase W are turned on to form the current path $\alpha$6.

In the seventh action mode M7, the upper arm $W_P$ of the W-phase W and the lower arm $U_N$ of the U-phase U are turned on to form the current path $\alpha$7. In the eighth action mode M8, the upper arm $W_P$ of the W-phase W and the lower arm $V_N$ of the V-phase V are turned on to form the current path $\alpha$8. In the ninth action mode M9, the upper arm $W_P$ of the W-phase W and the lower arm $W_N$ of the W-phase W are turned on to form the current path (recirculation loop) $\alpha$9.

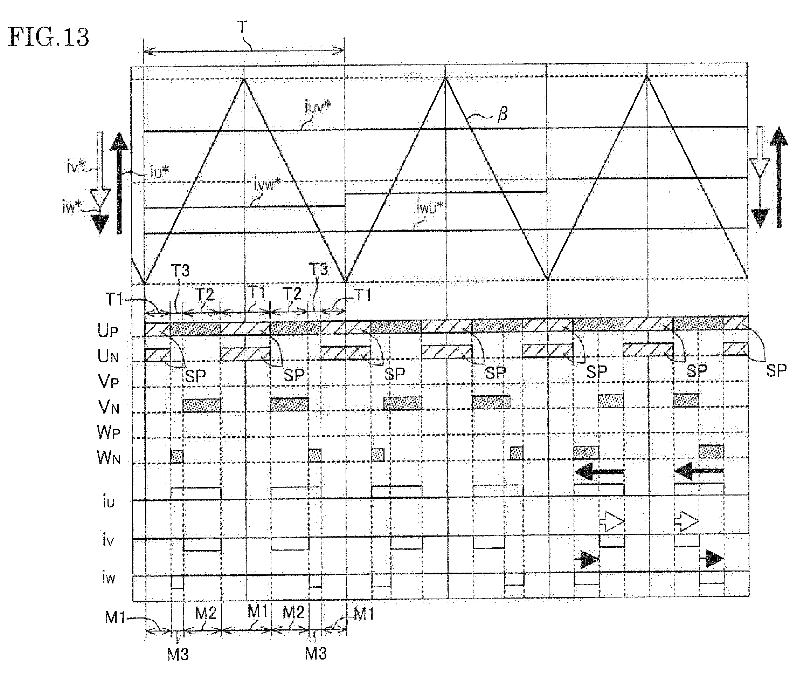

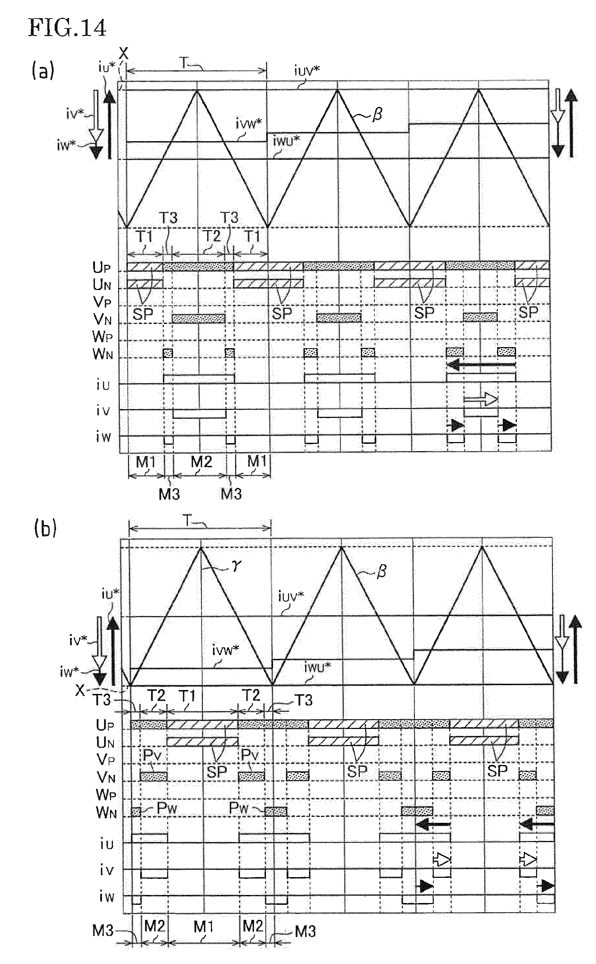

The first, fifth, and ninth action modes M1, M5, and M9 are referred to as short-circuit modes, in which a short-circuit pulse SP is generated (see FIGs. 13 and 14, described later).

FIG. 13 shows a diagram that is associated with a three-phase modulation executed by the controllers 13a to 13c of the three-phase current source electric power converting systems 10a to 10c respectively shown in FIGs. 9 to 11, and that illustrates exemplary changes over time in alternating-current side line current command values $i_U{}^*$, $i_V{}^*$, and $i_W{}^*$ respectively of the phases U, V, and W of the electric power converter A. The changes over time are illustrated in correspondence with the pulse patterns of the switching action modes shown in FIG. 12 and with the alternating-current side line currents $i_U$, $i_V$, and $i_W$.

FIG. 14 shows diagrams that are associated with first and second two-phase modulations executed by the controllers 13a to 13c of the three-phase current source electric power converting systems 10a to 10c respectively shown in FIGs. 9 to 11, and that illustrate exemplary changes over time in alternating-current side line current command values $i_U{}^*$, $i_V{}^*$, and $i_W{}^*$ respectively of the phases U, V, and W of the electric power converter A. The changes over time are illustrated in correspondence with the pulse patterns of the switching action modes shown in FIG. 12 and with the alternating-current side line currents $i_U$, $i_V$, and $i_W$. FIG. 14(a) shows an exemplary first two-phase modulation, while FIG. 14(b) shows an exemplary second two-phase modulation.

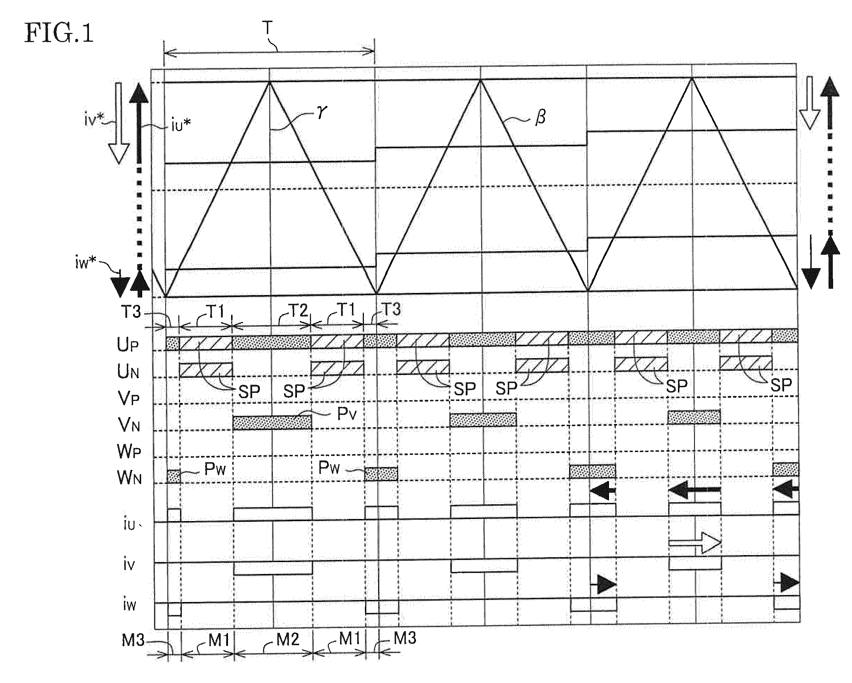

In FIG. 13 and FIG. 14, reference symbol $\beta$ denotes a carrier (triangular wave) to control switching actions. Reference symbols $i_{UV}{}^*$, $i_{VW}{}^*$, and $i_{WU}{}^*$ denote switching parameters used along with the carrier $\beta$ to determine the ratio, to one modulation period T, of the time during which the alternating-current side line currents $i_U$, $i_V$, and $i_W$ respectively flow through the phases U, V, and W. Between the switching parameter $i_{UV}{}^*$ and the switching parameter $i_{WU}{}^*$, the alternating-current side line current command value $i_U{}^*$ of the U-phase U is determined. Between the switching parameter $i_{VW}{}^*$ and the switching parameter $i_{UV}{}^*$, the alternating-current side line current command value $i_V{}^*$ of the V-phase V is determined. Between the switching parameter $i_{WU}{}^*$ and the switching parameter $i_{VW}{}^*$, the alternating-current side line current command value $i_W{}^*$ of the W-phase W is determined. Reference symbol T denotes one modulation period. Examples of the one modulation period T include, but not limited to, equal to or less than 100 $\mu$sec at a conversion electric power of equal to or less than 100 kW, and approximately 200 $\mu$sec at a conversion electric power exceeding 100 kW. These also apply to FIGs. 1 to 3 and FIG. 5.

The positions of the start point and the end point of one modulation period of the pulse-width modulation may be conveniently determined. In the three-phase current source electric power converting systems 10a to 10c shown in FIGs. 9 to 11, the start point and the end point of the one modulation period T may be set at, for example, positions at which the carrier $\beta$ has its minimum amplitude. In this case, the following switching action control is executed.

The following example is under the assumption that the alternating-current side line current $i_U$, which flows through the U-phase U, is a positive current, while the alternating-current side line current $i_V$, which flows through the V-phase V, and the alternating-current side line current $i_W$, which flows through the W-phase W, are negative currents. It is also assumed that the absolute value $|i_U{}^*|$ of the alternating-current side line current command values $i_U{}^*$ of the U-phase U is largest of all.

More specifically, the three-phase modulation and the first and second two-phase modulations will be described in this order, assuming that the current $i_L$ at the direct-current side is 20A and that the alternating-current side line currents $i_U$, $i_V$, and $i_W$ respectively of the U-phase U, the V-phase V, and the W-phase W flowing within the one modulation period T are respectively 10A, -7.5A, and -2.5A.

[Three-Phase Modulation]

In the exemplary three-phase modulation shown in FIG. 13, during the first time T1, the upper arm $U_P$ of the U-phase U and the lower arm $U_N$ of the U-phase U are turned on for 1/8 of the one modulation period T (which corresponds to the first action mode M1 (short-circuit mode) shown in FIG. 12). During the third time T3, the upper arm $U_P$ of the U-phase U and the lower arm $W_N$ of the W-phase W are turned on for 1/16 of the one modulation period T (which corresponds to the third action mode M3 shown in FIG. 12). During the second time T2, the upper arm $U_P$ of the U-phase U and the lower arm $V_N$ of the V-phase V are turned on for 3/16 of the one modulation period T (which corresponds to the second action mode M2 shown in FIG. 12).

Next, during the first time T1, the upper arm $U_P$ of the U-phase U and the lower arm $U_N$ of the U-phase U are turned on for 1/4 of the period (which corresponds to the first action mode M1 (short-circuit mode) shown in FIG. 12). During the second time T2, the upper arm $U_P$ of the U-phase U and the lower arm $V_N$ of the V-phase V are turned on for 3/16 of the period (which corresponds to the second action mode M2 shown in FIG. 12). During the third time T3, the upper arm $U_P$ of the U-phase U and the lower arm $W_N$ of the W-phase W are turned on for 1/16 of the period (which corresponds to the third action mode M3 shown in FIG. 12). During the first time T1, the upper arm $U_P$ of the U-phase U and the lower arm $U_N$ of the U-phase U are turned on for 1/8 of the period (which corresponds to the first action mode M1 (short-circuit mode) shown in FIG. 12).

That is, in the exemplary three-phase modulation, in the first action mode M1 (short-circuit mode), the upper arm $U_P$ of the U-phase U and the lower arm $U_N$ of the U-phase U are turned on for a first time T1 of 1/2 (= 1/8 + 1/4 + 1/8 = 50%) of the period T. In the second action mode M2, the upper arm $U_P$ of the U-phase U and the lower arm $V_N$ of the V-phase V are turned on for a second time T2 of 3/8 (= 3/16 + 3/16 = 37.5%) of the period T. In the third action mode M3, the upper arm Up of the U-phase U and the lower arm $W_N$ of the W-phase W are turned on for a third time T3 of 1/8 (= 1/16 + 1/16 = 12.5%) of the period T.

[First Two-Phase Modulation]

In the exemplary first two-phase modulation shown in FIG. 14(a), the switching parameter $i_{UV}*$ is disposed at the peak amplitude position X of the carrier β, while the switching parameters $i_{VW}*$ and the $i_{WU}*$ are disposed downward relative to the peak amplitude position X of the carrier β.

As shown in FIG. 14(a), during the first time T1, the upper arm $U_P$ of the U-phase U and the lower arm $U_N$ of the U-phase U are turned on for 1/4 of the one modulation period T (which corresponds to the first action mode M1 (short-circuit mode) shown in FIG. 12). During the third time T3, the upper arm $U_P$ of the U-phase U and the lower arm $W_N$ of the W-phase W are turned on for 1/16 of the one modulation period T (which corresponds to the third action mode M3 shown in FIG. 12). During the second time T2, the upper arm $U_P$ of the U-phase U and the lower arm $V_N$ of the V-phase V are turned on for 3/8 of the one modulation period T (which corresponds to the second action mode M2 shown in FIG. 12).

Next, during the third time T3, the upper arm $U_P$ of the U-phase U and the lower arm $W_N$ of the W-phase W are turned on for 1/16 of the period (which corresponds to the third action mode M3 shown in FIG. 12). During the first time T1, the upper arm Up of the U-phase U and the lower arm $U_N$ of the U-phase U are turned on for 1/4 of the period (which corresponds to the first action mode M1 (short-circuit mode) shown in FIG. 12).

That is, in the exemplary first two-phase modulation, in the first action mode M1 (short-circuit mode), the upper arm $U_P$ of the U-phase U and the lower arm $U_N$ of the U-phase U are turned on for a first time T1 of 1/2 (= 1/4 + 1/4 = 50%) of the period T. In the second action mode M2, the upper arm $U_P$ of the U-phase U and the lower arm $V_N$ of the V-phase V are turned on for a second time T2 of 3/8 (= 37.5%) of the period T. In the third action mode M3, the upper arm $U_P$ of the U-phase U and the lower arm $W_N$ of the W-phase W are turned on for a third time T3 of 1/8 (= 1/16 + 1/16 = 12.5%) of the period T.

[Second Two-Phase Modulation]

In the exemplary second two-phase modulation shown in FIG. 14(b), the switching parameter $i_{WU}*$ is disposed at the bottom amplitude position X of the carrier β, while the switching parameters $i_{UV}*$ and $i_{VW}*$ are disposed upward relative to the bottom amplitude position X of the carrier β.

As shown in FIG. 14(b), during the third time T3, the upper arm $U_P$ of the U-phase U and the lower arm $W_N$ of the W-phase W are turned on for 1/16 of the one modulation period T (which corresponds to the third action mode M3 shown in FIG. 12). During the second time T2, the upper arm $U_P$ of the U-phase U and the lower arm $V_N$ of the V-phase V are turned on for 3/16 of the one modulation period T (which corresponds to the second action mode M2 shown in FIG. 12). During the first time T1, the upper arm $U_P$ of the U-phase U and the lower arm $U_N$ of the U-phase U are turned on for 1/2 of the one modulation period T (which corresponds to the first action mode M1 (short-circuit mode) shown in FIG. 12).

Next, during the second time T2, the upper arm $U_P$ of the U-phase U and the lower arm $U_N$ of the V-phase V are turned on for 3/16 of the period (which corresponds to the second action mode M2 shown in FIG. 12). During the third period T3, the upper arm $U_P$ of the U-phase U and the lower arm $W_N$ of the W-phase W are turned on for 1/16 of the period (which corresponds to the third action mode M3 shown in FIG. 12).

That is, in the exemplary second two-phase modulation, in the first action mode M1 (short-circuit mode), the upper arm $U_P$ of the U-phase U and the lower arm $U_N$ of the U-phase U are turned on for a first time T1 of 1/2 (= 50%) of the period T. In the second action mode M2, the upper arm $U_P$ of the U-phase U and the lower arm $V_N$ of the V-phase V are turned on for a second time T2 of 3/8 (= 3/16 + 3/16 = 37.5%) of the period T. In the third action mode M3, the upper arm $U_P$ of the U-phase U and the lower arm $W_N$ of the W-phase W are turned on for a third time T3 of 1/8 (= 1/16 + 1/16 = 12.5%) of the period T.

This results in, throughout the one modulation period T, a flow of 10A (= $i_L \times$ (T2 + T3)/T) current through the U-phase, a flow of -7.5A (= $-i_L \times$ T2/T) current through the V-phase, a flow of -2.5A (= $-i_L \times$ T3/T) current through the W-phase, and a flow of 10A (= $i_L \times$ T1/T) current through the recirculation loop $\alpha 1$, in the three-phase modulation and the first and second two-phase modulations.

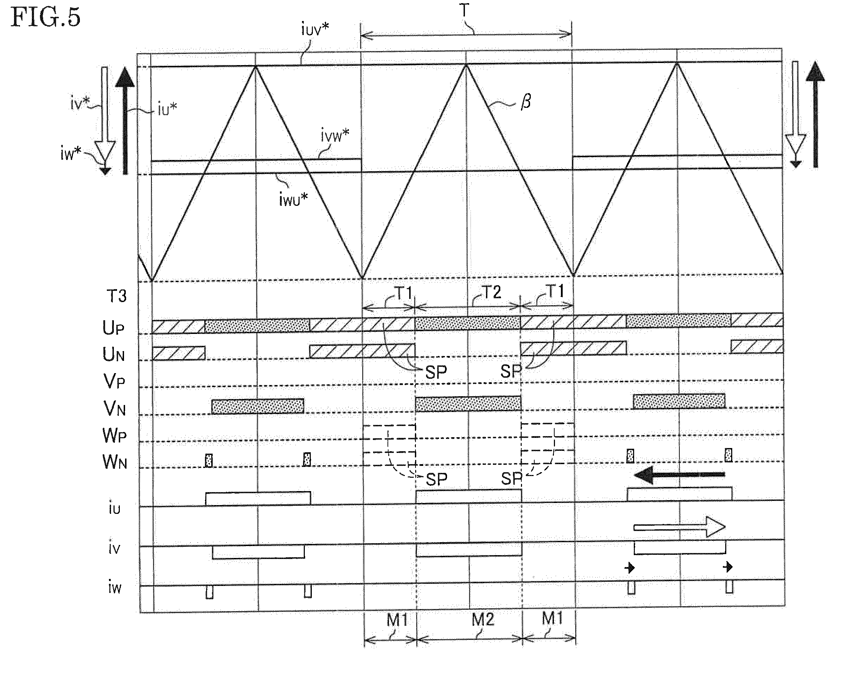

Incidentally, in a three-phase current source electric power converter, main factors contributing to development of switching loss include the number of commutations, the amount of current on the direct-current side, and the amount of inter-line voltage on the alternating-current side. As used herein, the term commutation is referred to as a switching of arms through which current flows from one arm to another arm. In FIGs. 13 and 14, this corresponds to a switching from an operating switching action mode to another switching action mode. The same applies to FIGs. 1 through 3, and to FIG. 5.

Specifically, a switching loss develops and the electric power conversion efficiency degrades accordingly as the number of commutations increases, and/or as the current on the direct-current side increases, and/or a switching action is executed with respect to each of the phases of the lines between which the absolute value of voltage is largest of all among the inter-line voltages on the alternating-current side.

[Number of Commutations]

As shown in FIG. 13, in the three-phase current source electric power converting system 10a to 10c, the three-phase modulation involves six commutations, that is, switching of the switching action modes of the first action mode M1 → the third action mode M3 → the second action mode M2 → the first action mode M1 → the second action mode M2 → the third action mode M3 → the first action mode M1.

In contrast, as shown in FIG. 14(a), the first two-phase modulation involves switching of the switching action modes of the first action mode M1 → the third action mode M3 → the second action mode M2 → the third action mode M3 → the first action mode M1. As shown in FIG. 14(b), the second two-phase modulation involves switching of the switching action modes of the third action mode M3 → the second action mode M2 → the first action mode M1 → the second action mode M2 → the third action mode M3. That is, in the first and second two-phase modulations, the number of commutations is four.

Accordingly, in the first and second two-phase modulations, the switching loss diminishes as compared with the three-phase modulation.

[Line-to-Line Voltage on the Alternating-Current Side]

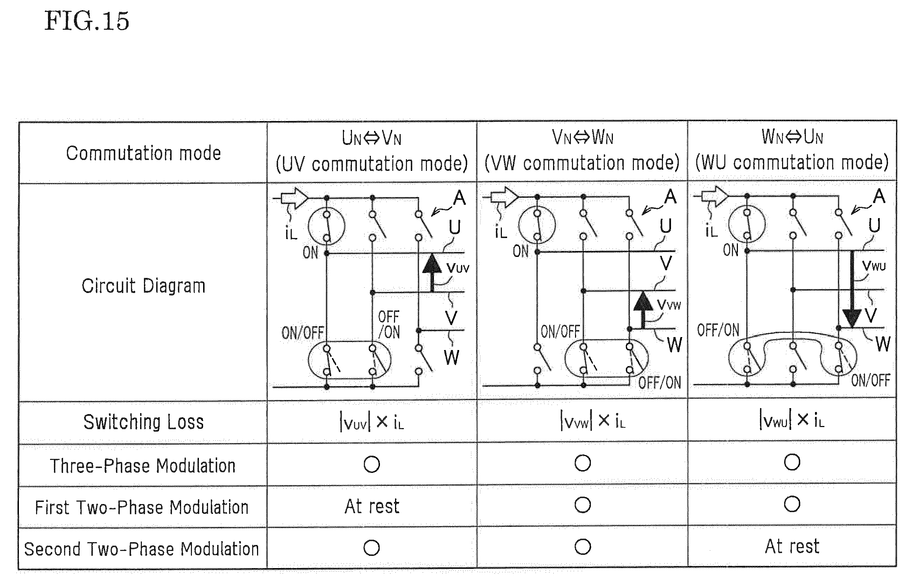

FIG. 15 is a table in the case where the absolute value $|i_U^*|$ of the alternating-current side line current command value $i_U^*$ of the U-phase U is largest of all, listing circuit diagrams of commutation modes in which commutations take place resulting from switching of switching action modes, calculating formulas of switching loss, commutation modes as targets for the three-phase modulation, commutation modes as targets for the first two-phase modulation, and commutation modes as targets for the second two-phase modulation.

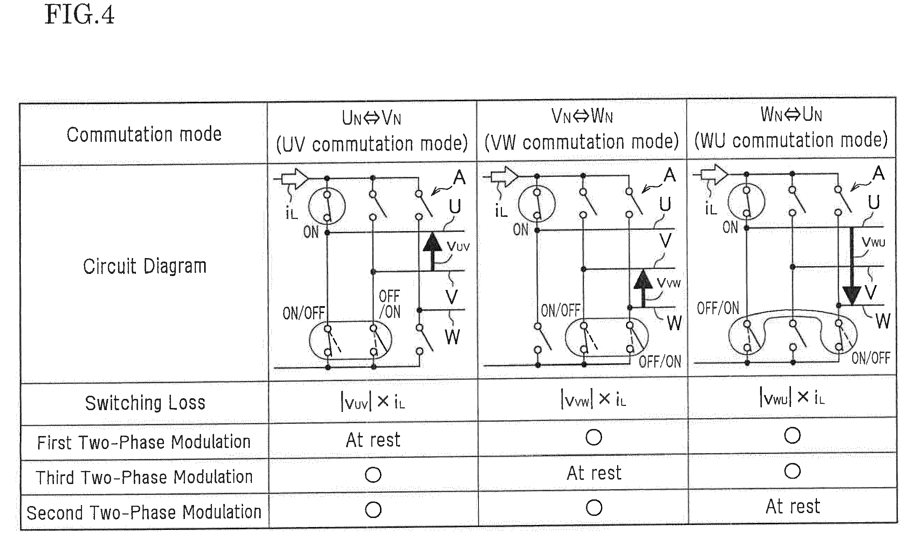

In the table shown in FIG. 15, reference symbol $V_{UV}$ denotes an alternating-current side inter-line voltage between the U-phase U and the V-phase V. Reference symbol $V_{VW}$ denotes an alternating-current side inter-line voltage between the V-phase V and the W-phase W. Reference symbol $V_{WU}$ denotes an alternating-current side inter-line voltage between the W-phase W and the U-phase U. The direction in which the arrow of each of the inter-line voltages $V_{UV}$, $V_{VW}$, and $V_{WU}$ is oriented denotes the positive direction. Among the commutation modes in the table, the UV commutation mode on the left side is a commutation mode in which a commutation takes place between the first action mode M1 and the second action mode M2. The commutation mode VW in the middle is a commutation mode in which a commutation takes place between the second action mode M2 and the third action mode M3. The commutation mode WU on the right side is a commutation mode in which a commutation takes place between the third action mode M3 and the first action mode M1. Reference symbol "o" indicates a target for modulation. These also apply to FIG. 4, described later.

As shown in FIG. 15, the UV commutation mode, the VW commutation mode, and the WU commutation mode are the targets for the three-phase modulation. The VW commutation mode and the WU commutation mode are the targets for the first two-phase modulation. The UV commutation mode and the VW commutation mode are the targets for the second two-phase modulation.

The switching loss in the UV commutation mode is $|V_{UV}| \times i_L$. In view of this, while the absolute value $|V_{UV}|$ of the alternating-current side inter-line voltage $V_{UV}$ is largest of all, executing the first two-phase modulation inhibits an increase in the switching loss, since the UV commutation mode is kept at rest. The switching loss in the WU commutation mode is $|V_{WU}| \times i_L$. In view of this, while the absolute value $|V_{WU}|$ of the alternating-current side inter-line voltage $V_{WU}$ is largest of all, executing the second two-phase modulation inhibits an increase in the switching loss, since the WU commutation mode is kept at rest.

The switching loss in the VW commutation mode is $|V_{VW}| \times i_L$. Limiting the electric power converter A to application to a three-phase current source high-power-factor electric power converter, which is for high-power-factor (at approximately 100% power factor) conversion of electric power, prevents the absolute value $|V_{VW}|$ of the alternating-current side inter-line voltage $V_{VW}$ from becoming largest of all. This eliminates the need for considering an increase in the switching loss associated with the alternating-current side inter-line voltage $V_{VW}$ between the V-phase V and the W-phase W.

On the other hand, using the electric power converter A as a low power factor three-phase current source converter or as a low power factor three-phase current source inverter may occasionally make the absolute value $|V_{VW}|$ of the alternating-current side inter-line voltage $V_{VW}$ largest of all. Thus, since the VW commutation mode is not kept at rest in both the first two-phase modulation and the second two-phase modulation, the execution of the VW commutation mode cannot be helped. This causes an unavoidable increase in the switching loss.

The above description exemplifies the alternating-current side line current command value $i_U{}^*$ of the U-phase U as having the largest absolute value, $|i_U{}^*|$. A similar way of thinking also applies to the other phases V and W, that is, to the case where the absolute value $|i_V{}^*|$ or $|i_W{}^*|$ of the alternating-current side line current command value $i_V{}^*$ or $i_W{}^*$ is largest of all.

The present invention has been made to solve the above-described problems, and it is an object of the present invention to provide a pulse pattern generating configuration for a three-phase current source electric power converter that ensures a minimal switching loss regardless of the level of the power factor, and thus improves the electric power conversion efficiency.

Means of Solving the Problems

In order to achieve the above-described object, the present invention provides a pulse pattern generating configuration for a three-phase current source electric power converter. The three-phase current source electric power converter is configured to convert electric power by pulse-width modulation and includes phases each including upper and lower arms of reverse-blocking switching elements. The three-phase current source electric power converter includes alternating-current side inter-line voltages. The phases include an inter-line voltage non-maximum phase not corresponding to any of lines between which one of the alternating-current side inter-line voltages has a largest absolute value. The three-phase current source converter includes alternating-current side line current command values. The phases include a line current command value maximum phase corresponding to one of the alternating-current side line current command values having a largest absolute value. When the inter-line voltage non-maximum phase and the line current command value maximum phase match one another, first switching control is executed in one modulation period of the pulse-width modulation so as to establish a separation time to separate, in time, switching pulses of two of the phases other than the line current command value maximum phase, and so as to dispose a short-circuit pulse in the separation time in the line current command value maximum phase. When the inter-line voltage non-maximum phase and the line current command value maximum phase do not match one another, second switching control is executed in the one modulation period of the pulse-width modulation so as to dispose the switching pulses of the two of the phases other than the line current command value maximum phase next to one another in time, and so as to dispose the short-circuit pulse in the inter-line voltage non-maximum phase or in the line current command value maximum phase such that the short-circuit pulse is next in time to the switching pulse of the inter-line voltage non-maximum phase.

In the pulse pattern generating configuration according to the present invention, for example, assume that the absolute value of the alternating-current side line current command value of the U-phase U is largest of all. Here, the case where the upper arm of the U-phase and the lower arm of the U-phase are turned on will be referred to as a first action mode. The case where the upper arm of the U-phase and the lower arm of the V-phase are turned on will be referred to as a second action mode. The case where the upper arm of the U-phase and the lower arm of the W-phase are turned on will be referred to as a third action mode. The commutation mode in which a commutation takes place between the first action mode and the second action mode will be referred to as a UV commutation mode. The commutation mode in which a commutation takes place between the second action mode and the third action mode will be referred to as a VW commutation mode. The commutation mode in which a commutation takes place between the third action mode and the first action mode will be referred to as a WU commutation mode.

When the absolute value of the alternating-current side inter-line voltage between the U-phase and the V-phase is largest of all, the second switching control causes a first two-phase modulation to keep the UV commutation mode at rest. When the absolute value of the alternating-current side inter-line voltage between the W-phase and the U-phase is largest of all, the second switching control causes a second two-phase modulation to keep the WU commutation mode at rest.

When the absolute value of the alternating-current side inter-line voltage between the V-phase and the W-phase is largest of all, the first switching control causes a third two-phase modulation to keep the VW commutation mode at rest.

A similar way of thinking applies to the cases where the largest absolute values of the alternating-current side line current command values of the other V-phase and W-phase are largest of all.

Thus, in the pulse pattern generating configuration according to the present invention, a two-phase modulation is executed. This reduces the number of times of switching (that is, diminishes the switching loss) compared with a three-phase modulation. This also keeps at rest the switching action mode of each of the phases corresponding to the lines between which one of the alternating-current side inter-line voltages of the three-phase current source converter has a largest absolute value. For example, assume that the absolute value of the alternating-current side line current command value of the U-phase is largest of all. Here, when the absolute value of the alternating-current side inter-line voltage between the V-phase and the W-phase is largest of all, executing a third two-phase modulation keeps the VW commutation mode at rest. This ensures a minimal switching loss regardless of the level of the power factor.

In the pulse pattern generating configuration according to the present invention, when the alternating-current side line current command values of the three-phase current source electric power converter include zero, the short-circuit pulse is preferably disposed in any of the phases corresponding to at least one of a last pulse in a previous modulation period immediately before the one modulation period and a first pulse in a next modulation period immediately after the one modulation period.

This embodiment ensures avoidance of a singular point between adjacent modulation periods, and does not involve switching of transfer mode between adjacent modulation periods. This further reduces the number of times of switching (that is, diminishes the switching loss).

In the pulse pattern generating configuration according to the present invention, pulse patterns in the one modulation period are preferably symmetrical about a time axis of a center of the one modulation period.

This embodiment ensures that the switching frequency components of the waveform of a line current of the three-phase current source electric power converter on the alternating-current side are collected to adjacent the switching frequency. This ensures a simplified circuit design such as for a filter circuit coupled to the alternating-current side.

Effects of the Invention

As has been described hereinabove, in the pulse pattern generating configuration according to the present invention, a two-phase modulation is executed. This reduces the number of times of switching (that is, diminishes the switching loss) compared with a three-phase modulation. This also keeps at rest the switching action mode of each of the phases corresponding to the lines between which one of the alternating-current side inter-line voltages of the three-phase current source electric power converter has a largest absolute value. For example, assume that the absolute value of the alternating-current side line current command value of the U-phase is largest of all. Here, when the absolute value of the alternating-current side inter-line voltage between the V-phase and the W-phase is largest of all, executing a third two-phase modulation keeps the VW commutation mode at rest. This ensures a minimal switching loss regardless of the level of the power factor.

Brief Description of the Drawings

[FIG. 1] FIG. 1 shows a diagram that is associated with a third two-phase modulation of a two-phase modulation according to an embodiment executed by controllers in three-phase current source electric power converting systems shown in FIGs. 9 to 11, and that illustrates exemplary changes over time in alternating-current side line current command values, in correspondence with pulse patterns of switching action modes shown in FIG. 12 and with alternating-current side line currents.

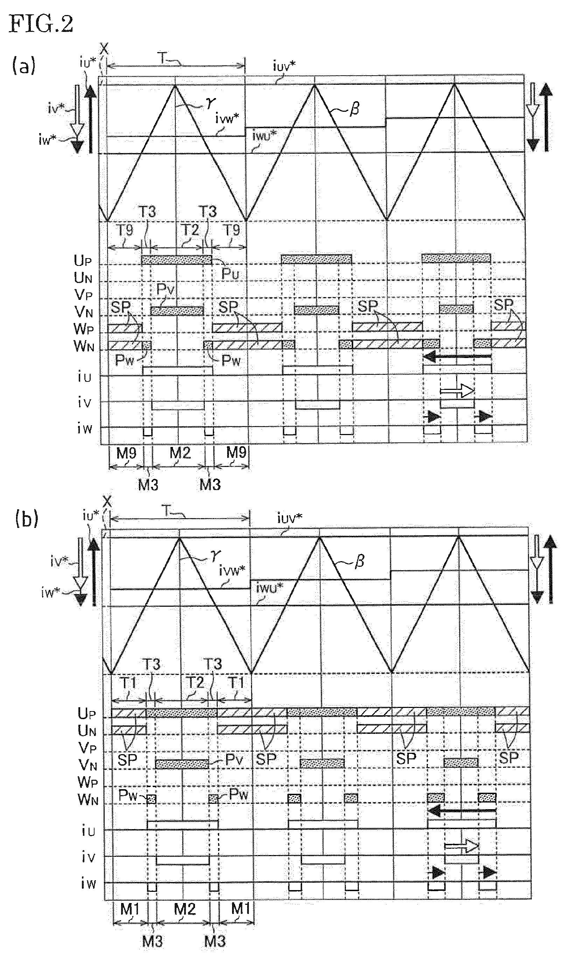

[FIG. 2] FIG. 2 shows diagrams that are associated with a first two-phase modulation of the two-phase modulation according to the embodiment executed by the controllers in the three-phase current source electric power converting systems shown in FIGs. 9 to 11, and that illustrate exemplary changes over time in alternating-current side line current command values, in correspondence with the pulse patterns of the switching action modes shown in FIG. 12 and with the alternating-current side line currents: FIG. 2(a) shows another example of the first two-phase modulation, while FIG. 2(b) shows one example of the first two-phase modulation.

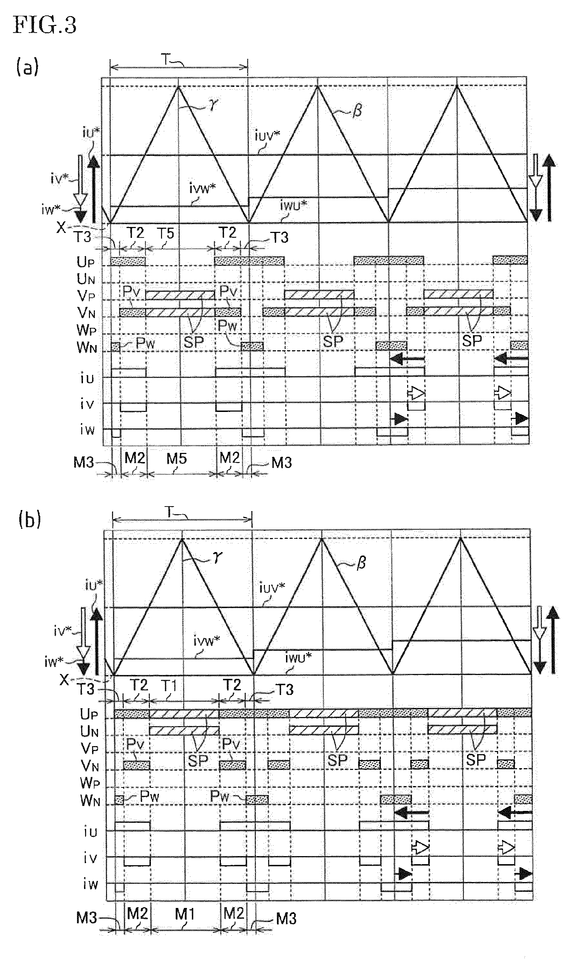

[FIG. 3] FIG. 3 shows diagrams that are associated with a second two-phase modulation of the two-phase modulation according to the embodiment executed by the controllers in the three-phase current source electric power converting systems shown in FIGs. 9 to 11, and that illustrate exemplary changes over time in alternating-current side line current command values, in correspondence with the pulse patterns of the switching action modes shown in FIG. 12 and with the alternating-current side line currents: FIG. 3(a) shows another example of the second two-phase modulation, while FIG. 3(b) shows one example of the second two-phase modulation.

[FIG. 4] FIG. 4 is a table in the case where the absolute value of the alternating-current side line current command value of the U-phase is largest of all, listing circuit diagrams of commutation modes in which commutations take place resulting from switching of switching action modes, calculating formulas of switching loss, commutation modes as targets for the first two-phase modulation, commutation modes as targets for the third two-phase modulation, and commutation modes as targets for the second two-phase modulation.

[FIG. 5] FIG. 5 shows a diagram that is associated with the two-phase modulation according to the embodiment executed by the controllers in the three-phase current source electric power converting systems shown in FIGs. 9 to 11, and that illustrates exemplary changes over time in alternating-current side line current command values in the case where the alternating-current side line current command values include zero, in correspondence with the pulse patterns of the switching action modes shown in FIG. 12 and with the alternating-current side line currents.

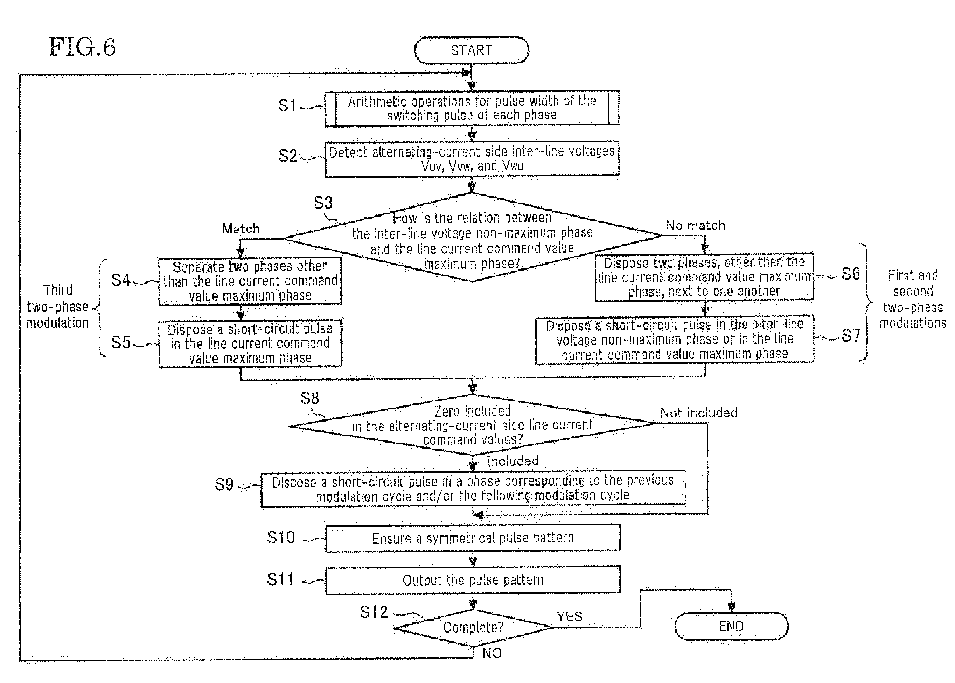

[FIG. 6] FIG. 6 is a flowchart showing a main routine of exemplary switching control according to the embodiment.

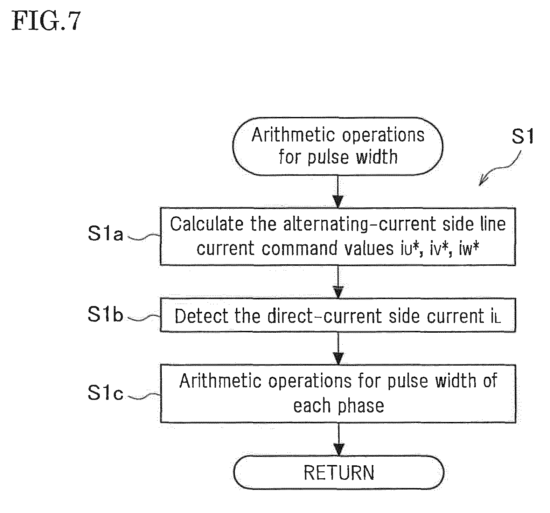

[FIG. 7] FIG. 7 is a flowchart showing a subroutine of an exemplary arithmetic operation for pulse width in the flowchart shown in FIG. 6.

[FIG. 8] FIG. 8 is a schematic circuit diagram of the three-phase current source electric power converting system disclosed in non-patent document 1.

[FIG. 9] FIG. 9 is a circuit diagram of an exemplary three-phase current source electric power converting system for driving a motor as a load in the case where a three-phase current source electric power converter is applied to a three-phase current source inverter.

[FIG. 10] FIG. 10 is a circuit diagram of a three-phase current source electric power converting system, illustrating, in the case where the three-phase current source electric power converter is applied to the three-phase current source inverter, an example in which the three-phase current source electric power converter is used as SVG or APF with the three-phase current source inverter.

[FIG. 11] FIG. 11 is a circuit diagram of an exemplary three-phase current source electric power converting system to execute a system interconnection operation in the case where the three-phase current source electric power converter is applied to the three-phase current source inverter.

[FIG. 12] FIG. 12 is a table of current paths associated with ON arm combinations (switching action modes) in the electric power converter; in each of the ON arm combinations, one of the upper arms of the U-phase, the V-phase, and the W-phase is turn on, and one of the lower arms of the U-phase, the V-phase, and the W-phase is turn on.

[FIG. 13] FIG. 13 shows a diagram that is associated with a three-phase modulation executed by the controllers in the three-phase current source electric power converting systems shown in FIGs. 9 to 11, and that illustrates exemplary changes over time in alternating-current side line current command values of the phases of the three-phase current source electric power converter, in correspondence with the pulse patterns of the switching action modes shown in FIG. 12 and with the alternating-current side line currents.

[FIG. 14] FIG. 14 shows diagrams that are associated with first and second two-phase modulations executed by the controllers in the three-phase current source electric power converting systems shown in FIGs. 9 to 11, and that illustrate exemplary changes over time in alternating-current side line current command values of the phases of the three-phase current source electric power converter, in correspondence with the pulse patterns of the switching action modes shown in FIG. 12 and with the alternating-current side line currents; FIG. 14(a) shows an exemplary first two-phase modulation, while FIG. 14(b) shows an exemplary second two-phase modulation.

[FIG. 15] FIG. 15 is a table in the case where the absolute value of the alternating-current side line current command value of the U-phase is largest of all, listing circuit diagrams of commutation modes in which commutations take place resulting from switching of switching action modes, calculating formulas of switching loss, commutation modes as targets for the three-phase modulation, commutation modes as targets for the first two-phase modulation, and commutation modes as targets for the second two-phase modulation.

Modes for Carrying out the Invention

The embodiments of the present invention will now be described with reference to the accompanying drawings and to exemplary three-phase current source electric power converting systems 10a to 10c respectively shown in FIGs. 9 to 11. It is noted that the embodiments are provided merely for exemplary purposes and are not intended to limit the present invention.

In the three-phase current source electric power converting systems 10a to 10c shown in FIGs. 9 to 11, the controllers 13a to 13c use a switching control program according to this embodiment of the present invention to execute first to third two-phase modulations so as to generate pulse patterns with respect to the electric power converter A.

Specifically, the electric power converter A includes alternating-current side inter-line voltages $V_{UV}$, $V_{VW}$, and $V_{WU}$. The phases include an inter-line voltage non-maximum phase not corresponding to any of lines between which one of the alternating-current side inter-line voltages $V_{UV}$, $V_{VW}$, and $V_{WU}$ has a largest absolute value, among the absolute values $|V_{UV}|$, $|V_{VW}|$, and $|V_{WU}|$. The electric power converter A includes alternating-current side line current command values $i_U{}^*$, $i_V{}^*$, $i_W{}^*$. The phases include a line current command value maximum phase corresponding to one of the alternating-current side line current command values $i_U{}^*$, $i_V{}^*$, $i_W{}^*$ having a largest absolute value, among the absolute values $|i_U{}^*|$, $|i_V{}^*|$, and $|i_W{}^*|$. When the inter-line voltage non-maximum phase and the line current command value maximum phase match one another, the controllers 13a to 13c each execute first switching control in one modulation period T of the pulse-width modulation so as to establish a separation time to separate, in time, switching pulses of two of the phases other than the line current command value maximum phase, and so as to dispose a short-circuit pulse SP in the separation time in the line current command value maximum phase.

When the inter-line voltage non-maximum phase and the line current command value maximum phase do not match one another, the controllers 13a to 13c each execute second switching control in the one modulation period T of the pulse-width modulation so as to dispose the switching pulses of two of the phases other than the line current command value maximum phase next (in continuous) to one another in time, and so as to dispose the short-circuit pulse in the inter-line voltage non-maximum phase or in the line current command value maximum phase such that the short-circuit pulse is next (continuous) in time to the switching pulse of the inter-line voltage non-maximum phase as if to fill in an adjacent off-time, during which switching is in off state.

As shown in FIGs. 9 to 11, the three-phase current source electric power converting systems 10a to 10c include direct-current side current detecting means 17 for detecting a direct-current side current $i_L$ and inter-line voltage detecting means 18 for detecting the alternating-current side inter-line voltages $V_{UV}$, $V_{VW}$, and $V_{WU}$. This ensures that the direct-current side current $i_L$ is detected by the direct-current side current detecting means 17, while the alternating-current side inter-line voltages $V_{UV}$, $V_{VW}$, and $V_{WU}$ are detected by the inter-line voltage detecting means 18.

Specifically, an example will be described by referring to FIGs. 1 to 5 under the assumption that the alternating-current side line current $i_U$, which flows through the U-phase U, is a positive current, while the alternating-current side line current $i_V$, which flows through the V-phase V, and the alternating-current side line current $i_W$, which flows through the W-phase W, are negative currents. It is also assumed that the absolute value $|i_U{}^*|$ of the alternating-current side line current command value $i_U{}^*$ of the U-phase U is largest of all. Regarding the third two-phase modulation, the following description exemplifies the alternating-current side inter-line voltage $V_{VW}$ as having a largest absolute value, $|V_{VW}|$. Regarding the first two-phase modulation, the following description exemplifies the alternating-current side inter-line voltage $V_{UV}$ as having a largest absolute value, $|V_{UV}|$. Regarding the second two-phase modulation, the following description exemplifies the alternating-current side inter-line voltage $V_{WU}$ as having a largest absolute value, $|V_{WU}|$.

In the description below, the upper and lower arms ($U_P$, $U_N$), the upper and lower arms ($V_P$, $V_N$), and the upper and lower arms ($W_P$, $W_N$ ) are in off-state except as otherwise noted.

FIG. 1 shows a diagram that is associated with a third two-phase modulation of the two-phase modulation according to this embodiment executed by the controllers 13a to 13c in the three-phase current source electric power converting systems 10a to 10c respectively shown in FIGs. 9 to 11, and that illustrates exemplary changes over time in the alternating-current side line current command values $i_U{}^*$, $i_V{}^*$, and $i_W{}^*$, in correspondence with the pulse patterns of switching action modes shown in FIG. 12 and with the alternating-current side line currents $i_U$, $i_V$, and $i_W$.

FIG. 2 shows diagrams that are associated with a first two-phase modulation of the two-phase modulation according to this embodiment executed by the controllers 13a to 13c in the three-phase current source electric power converting systems 10a to 10c respectively shown in FIGs. 9 to 11, and that illustrate exemplary changes over time in the alternating-current side line current command values $i_U{}^*$, $i_V{}^*$, and $i_W{}^*$, in correspondence with the pulse patterns of switching action modes shown in FIG. 12 and with the alternating-current side line currents $i_U$, $i_V$, and $i_W$. FIG. 2(a) shows another example of the first two-phase modulation, while FIG. 2(b) shows one example of the first two-phase modulation. FIG. 2(b) corresponds to FIG. 14(a) described above.

FIG. 3 shows diagrams that are associated with a second two-phase modulation of the two-phase modulation according to this embodiment executed by the controllers 13a to 13c in the three-phase current source electric power converting systems 10a to 10c respectively shown in FIGs. 9 to 11, and that illustrate exemplary changes over time in the alternating-current side line current command values $i_U{}^*$, $i_V{}^*$, and $i_W{}^*$, in correspondence with the pulse patterns of switching action modes shown in FIG. 12 and with the alternating-current side line currents $i_U$, $i_V$, and $i_W$. FIG. 3(a) shows another example of the second two-phase modulation, while FIG. 3(b) shows one example of the second two-phase modulation. FIG. 3(b) corresponds to FIG. 14(b) described above.

First, the third two-phase modulation will be described, and then the first two-phase modulation and the second two-phase modulation will be described in this order.

In the three-phase current source electric power converting systems 10a to 10c shown in FIGs. 9 to 11, the start point and the end point of the one modulation period T of the pulse-width modulation are set at, for example, positions of minimum amplitude of the carrier β. In this case, the following control of switching actions is executed.

In the following description, it is assumed that the alternating-current side line current $i_U$, which flows through the U-phase U, is a positive current, while the alternating-current side line current $i_V$, which flows through the V-phase V, and the alternating-current side line current $i_W$, which flows through the W-phase W, are negative currents. It is also assumed that the absolute value $|i_U{}^*|$ of the alternating-current side line current command value $i_U{}^*$ of the U-phase U is largest of all. Specifically, the direct-current side current $i_L$ is assumed 20A. The alternating-current side line currents $i_U$, $i_V$, and $i_W$ respectively flowing in the U-phase U, the V-phase V, and the W-phase W in the one modulation period T are respectively assumed 10A, -7.5A, and -2.5A. Under this assumption, the third two-phase modulation and the first and second two-phase modulations will be described in this order.

[Third Two-Phase Modulation]

(Absolute Value $|V_{VW}|$ of the Voltage $V_{VW}$ is Largest of All)

It is assumed that the absolute value $|V_{VW}|$ of the voltage $V_{VW}$ is largest of all. In the exemplary third two-phase modulation shown in FIG. 1, the inter-line voltage non-maximum phase (U-phase in this case), which does not correspond to any of the lines (V-phase and W-phase in this case) between which there is the voltage $V_{VW}$ having the largest absolute value $|V_{VW}|$, matches the line current command value maximum phase (U-phase in this case), which corresponds to one of the alternating-current side line current command values $i_U{}^*$, $i_V{}^*$, $i_W{}^*$ having the largest absolute value ($|i_U{}^*|$ in this case), among the absolute values $|i_U{}^*|$, $|i_V{}^*|$, and $|i_W{}^*|$.

Accordingly, in the first switching control, in the one modulation period T of the pulse-width modulation, a separation time (first time T1) is established to separate, in time, the switching pulses ($P_V$ and $P_W$ in this case) of two (V-phase and W-phase in this case) of the phases, excluding the line current command value maximum phase (U-phase in this case). At the same time, a short-circuit pulse SP is disposed in the separation time (first time T1) in the line current command value maximum phase (the U-phase in this case).

Specifically, during the third time T3, the upper arm $U_P$ of the U-phase U and the lower arm $W_N$ of the W-phase W are turned on for 1/16 of the one modulation period T (which corresponds to the third action mode M3 shown in FIG. 12). During the separation time (first time T1), the upper arm $U_P$ of the U-phase U and the lower arm $U_N$ of the U-phase U are turned on for 1/4 of the one modulation period T (which corresponds to the first action mode M1 (short-circuit mode) shown in FIG. 12). During the second time T2, the upper arm $U_P$ of the U-phase U and the lower arm $V_N$ of the V-phase V are turned on for 3/8 of the one modulation period T (which corresponds to the second action mode M2 shown in FIG. 12).

Next, during the separation time (first time T1), the upper arm $U_P$ of the U-phase U and the lower arm $U_N$ of the U-phase U are turned on for 1/4 of the period (which corresponds to the first action mode M1 (short-circuit mode) shown in FIG. 12). During the third time T3, the upper arm $U_P$ of the U-phase U and the lower arm $W_N$ of the W-phase W are turned on for 1/16 of the period (which corresponds to the third action mode M3 shown in FIG. 12).

[First Two-Phase Modulation]

(Absolute Value $|V_{UV}|$ of the Voltage $V_{UV}$ is Largest of All)

It is assumed that the absolute value $|V_{UV}|$ of the voltage $V_{UV}$ is largest of all. In this case, in the first two-phase modulation shown in FIG. 2, there is no match between the inter-line voltage non-maximum phase (W-phase in this case), which does not correspond to any of the lines (U-phase and V-phase in this case) between which there is the voltage $V_{UV}$ having the absolute value $|V_{UV}|$, and the line current command value maximum phase (U-phase in this case).

Accordingly, in the second switching control, in the one modulation period T of the pulse-width modulation, the switching pulses ($P_V$ and $P_W$ in this case) of two (V-phase and W-phase in this case) of the phases, excluding the line current command value maximum phase (U-phase in this case), are disposed next (in continuous) to one another in time, and the short-circuit pulse SP is disposed in the inter-line voltage non-maximum phase (W-phase in this case, see FIG. 2(a)) or in the line current command value maximum phase (U-phase in this case, see FIG. 2(b)) such that the short-circuit pulse SP is next (continuous) in time to the switching pulse ($P_W$ in this case) of the inter-line voltage non-maximum phase (W-phase in this case) as if to fill in an adjacent off-time (ninth time T9 in FIG. 2(a) or first time T1 in FIG. 2(b)), during which switching is in off state.

Specifically, in the example shown in FIG. 2(a), during the adjacent off-time (ninth time T9), the upper arm $W_P$ of the W-phase W and the lower arm $W_N$ of the W-phase W are turned on for 1/4 of the one modulation period T (which corresponds to the ninth action mode M9 shown in FIG. 12 (short-circuit mode)). During the third time T3, the upper arm $U_P$ of the U-phase U and the lower arm $W_N$ of the W-phase W are turned on for 1/16 of the one modulation period T (which corresponds to the third action mode M3 shown in FIG. 12). During the second time T2, the upper arm $U_P$ of the U-phase U and the lower arm $V_N$ of the V-phase V are turned on for 3/8 of the one modulation period T (which corresponds to the second action mode M2 shown in FIG. 12).

Next, during the third time T3, the upper arm $U_P$ of the U-phase U and the lower arm $W_N$ of the W-phase W are turned on for 1/16 of the period (which corresponds to the third action mode M3 shown in FIG. 12). During the adjacent off-time (the ninth time T9), the upper arm $W_P$ of the W-phase W and the lower arm $W_N$ of the W-phase W are turned on for 1/4 of the period (which corresponds to the ninth action mode M9 shown in FIG. 12 (short-circuit mode)).

In the example shown in FIG. 2(b), during the adjacent off-time (first time T1), the upper arm $U_P$ of the U-phase U and the lower arm $U_N$ of the U-phase U are turned on for 1/4 of the one modulation period T (which corresponds to the first action mode M1 (short-circuit mode) shown in FIG. 12). During the third time T3, the upper arm $U_P$ of the U-phase U and the lower arm $W_N$ of the W-phase W are turned on for 1/16 of the one modulation period T (which corresponds to the third action mode M3 shown in FIG. 12). During the second time T2, the upper arm $U_P$ of the U-phase U and the lower arm $V_N$ of the V-phase V are turned on for 3/8 of the one modulation period T (which corresponds to the second action mode M2 shown in FIG. 12).

Next, during the third time T3, the upper arm $U_P$ of the U-phase U and the lower arm $W_N$ of the W-phase W are turned on for 1/16 of the period (which corresponds to the third action mode M3 shown in FIG. 12). At the adjacent off-time (first time T1), the upper arm $U_P$ of the U-phase U and the lower arm $U_N$ of the U-phase U are turned on for 1/4 of the period (first action mode M1 in FIG. 12 (short-circuit mode)).

In this respect, the switching pulse ($P_W$ in this case) of the inter-line voltage non-maximum phase (W-phase in this case) occasionally has an extremely narrow pulse width. This creates a possibility of missed detection of the switching pulse ($P_W$ in this case) of the inter-line voltage non-maximum phase (W-phase in this case) in the course of the switching control. In view of this, it is preferable to dispose a short-circuit pulses SP in the inter-line voltage non-maximum phase (W-phase in this case). This eliminates switching pulses of extremely narrow pulse widths, which, in turn, ensures accurate switching control. This also applies to the next second two-phase modulation.

[Second Two-Phase Modulation]

(Absolute Value $|V_{WU}|$ of the Voltage $V_{WU}$ is Largest of All)

It is assumed that the absolute value $|V_{WU}|$ of the voltage $V_{WU}$ is largest of all. In this case, in the second two-phase modulation shown in FIG. 3, there is no match between the inter-line voltage non-maximum phase (V-phase in this case), which does not correspond to any of the lines (W-phase and U-phase in this case) between which there is the voltage $V_{WU}$ having the absolute value $|V_{WU}|$, and the line current command value maximum phase (U-phase in this case).

Accordingly, in the second switching control, in the one modulation period T of the pulse-width modulation, the switching pulses ($P_V$ and $P_W$ in this case) of two (V-phase and W-phase in this case) of the phases, excluding the line current command value maximum phase (U-phase in this case), are disposed next (in continuous) to one another in time, and the short-circuit pulse SP is disposed in the inter-line voltage non-maximum phase (V-phase in this case, see FIG. 3(a)) or in the line current command value maximum phase (U-phase in this case, see FIG. 3(b)) such that the short-circuit pulse SP is next (continuous) in time to the switching pulse ($P_V$ in this case) of the inter-line voltage non-maximum phase (V-phase in this case) as if to fill in an adjacent off-time (fifth time T5 in FIG. 3(a) or first time T1 in FIG. 3(b)), during which switching is in off state.

Specifically, in the example shown in FIG. 3(a), during the third time T3, the upper arm $U_P$ of the U-phase U and the lower arm $W_N$ of the W-phase W are turned on for 1/16 of the one modulation period T (which corresponds to the third action mode M3 shown in FIG. 12). During the second time T2, the upper arm $U_P$ of the U-phase U and the lower arm $V_N$ of the V-phase V are turned on for 3/16 of the one modulation period T (which corresponds to the second action mode M2 shown in FIG. 12). During the adjacent off-time (fifth time T5), the upper arm $V_P$ of the V-phase V and the lower arm $V_N$ of the V-phase V are turned on for 1/2 of the one modulation period T (which corresponds to the fifth action mode M5 in FIG. 12 (short-circuit mode)).

Next, during the second time T2, the upper arm $U_P$ of the U-phase U and the lower arm $U_N$ of the V-phase V are turned on for 3/16 of the period (which corresponds to the second action mode M2 shown in FIG. 12). During the third time T3, the upper arm $U_P$ of the U-phase U and the lower arm $W_N$ of the W-phase W are turned on for 1/16 of the period (which corresponds to the third action mode M3 shown in FIG. 12).

In the example shown in FIG. 3(b), during the third time T3, the upper arm $U_P$ of the U-phase U and the lower arm $W_N$ of the W-phase W are turned on for 1/16 of the one modulation period T (which corresponds to the third action mode M3 shown in FIG. 12). During the second time T2, the upper arm $U_P$ of the U-phase U and the lower arm $V_N$ of the V-phase V are turned on for 3/16 of the one modulation period T (which corresponds to the second action mode M2 shown in FIG. 12). During the adjacent off-time (the first time T1), the upper arm $U_P$ of the U-phase U and the lower arm $U_N$ of the U-phase U are turned on for 1/2 of the one modulation period T (which corresponds to the first action mode M1 (short-circuit mode) shown in FIG. 12). The rest is similar to the example shown in FIG. 3(a), and therefore it will not be further elaborated here.

[Number of Commutations]

As shown in FIG. 1, the third two-phase modulation involves switching of the switching action modes of the third action mode M3 → the first action mode M1 → the second action mode M2 → the first action mode M1 → the third action mode M3. Thus, in the third two-phase modulation, the number of commutations is four. In both the first and second two-phase modulations, the number of commutations is four, as described above.

Accordingly, in the first to third two-phase modulations, the switching loss diminishes as compared with the three-phase modulation.

[Line-to-Line Voltage on the Alternating-Current Side]

FIG. 4 is a table in the case where the absolute value $|i_U{}^*|$ of the alternating-current side line current command value $i_U{}^*$ of the U-phase U is largest of all, listing circuit diagrams of commutation modes in which commutations take place resulting from switching of switching action modes, calculating formulas of switching loss, commutation modes as targets for the first two-phase modulation, commutation modes as targets for the third two-phase modulation, and commutation modes as targets for the second two-phase modulation.

As shown in FIG. 4, the VW commutation mode and the WU commutation mode are the targets for the first two-phase modulation. The UV commutation mode and the WU commutation mode are the targets for the third two-phase modulation. The UV commutation mode and the VW commutation mode are the targets for the second two-phase modulation.

As shown in FIG. 4, it is assumed that the absolute value $|i_U{}^*|$ of the alternating-current side line current command value $i_U{}^*$ of the U-phase U is largest of all. In this case, when the alternating-current side inter-line voltage $V_{UV}$ between the U-phase U and the V-phase V has the largest absolute value $|V_{UV}|$, executing the second switching control implements the first two-phase modulation to keep the UV commutation mode at rest. When the alternating-current side inter-line voltage $V_{WU}$ between the W-phase W and the U-phase U has the largest absolute value $|V_{WU}|$, executing the second switching control implements the second two-phase modulation to keep the WU commutation mode at rest.

When the alternating-current side inter-line voltage $V_{VW}$ between the V-phase V and the W-phase W has the largest absolute value $|V_{VW}|$, executing the first switching control implements the third two-phase modulation to keep the VW commutation mode at rest.

The above description exemplifies the alternating-current side line current command value $i_U{}^*$ of the U-phase U as having the largest absolute value, $|i_U{}^*|$. A similar way of thinking also applies to the other phases V and W, that is, to the case where the absolute value $|i_V{}^*|$ or $|i_W{}^*|$ of the alternating-current side line current command value $i_V{}^*$ or $i_W{}^*$ is largest of all.

In the three-phase current source electric power converting systems 10a to 10c according to this embodiment of the present invention, the two-phase modulation is executed. This reduces the number of times of switching (that is, diminishes the switching loss) compared with the three-phase modulation. This also keeps at rest the switching action mode of each of the phases corresponding to the lines between which one of the alternating-current side inter-line voltages $V_{UV}$, $V_{VW}$, and $V_{WU}$ of the electric power converter A has the largest absolute value, among the absolute values $|V_{UV}|$, $|V_{VW}|$, and $|V_{WU}|$. For example, assume that the absolute value $|i_U{}^*|$ of the alternating-current side line current command value $i_U{}^*$ of the U-phase U is largest of all. Here, when the absolute value $|V_{VW}|$ of the alternating-current side inter-line voltage $V_{VW}$ between the V-phase V and the W-phase W is largest of all, executing the third two-phase modulation keeps the VW commutation mode at rest. This ensures a minimal switching loss regardless of the level of the power factor.

Incidentally, if a pulse pattern is not symmetrical about the time axis γ of the center of the one modulation period T, dispersion occurs of the switching frequency components of the waveforms of the line currents $i_U$, $i_V$, and $i_W$ on the alternating-current side of the electric power converter A. This increases frequency components to take into consideration, resulting in a complicated circuit design such as for a filter circuit F to remove the switching frequency components. In contrast, in this embodiment, a pulse pattern in the one modulation period T is symmetrical about the time axis γ of the center of the one modulation period T. This ensures that the switching frequency components of the waveforms of the line currents $i_U$, $i_V$, and $i_W$ on the alternating-current side of the electric power converter A are collected to adjacent the switching frequency. This ensures a simplified circuit design such as for the filter circuit F coupled to the alternating-current side.

In this embodiment, the memory 15 of each of the controllers 13a to 13c stores in advance tables of the alternating-current side line current command values $i_U{}^*$, $i_V{}^*$, and $i_W{}^*$. A timing may exist at which the alternating-current side line current command values $i_U{}^*$, $i_V{}^*$, and $i_W{}^*$ include zero.

FIG. 5 shows a diagram that is associated with the two-phase modulation according to this embodiment executed by the controllers 13a to 13c in the three-phase current source electric power converting systems 10a to 10c respectively shown in FIGs. 9 to 11, and that illustrates exemplary changes over time in the alternating-current side line current command values $i_U{}^*$, $i_V{}^*$, $i_W{}^*$ in the case where the alternating-current side line current command values $i_U{}^*$, $i_V{}^*$, $i_W{}^*$ include zero, in correspondence with the pulse patterns of the switching action modes shown in FIG. 12 and with the alternating-current side line currents $i_U$, $i_V$, and $i_W$.

As shown in FIG. 5, when the alternating-current side line current command values $i_U{}^*$, $i_V{}^*$, and $i_W{}^*$ include zero, only two phases remain to undergo switching actions for electric power conversion. If the short-circuit pulses SP in adjacent modulation periods are disposed at mutually different phases as indicated by the dashed lines, the number of commutations increases, which, in turn, unadvantageously increases the number of times of switching (that is, develops the switching loss).

In view of this, it is preferred that as indicated by the oblique lines, a short-circuit pulse SP be disposed in any of the phases corresponding to at least one (both in this case) of a last short-circuit pulse SP in the previous modulation period immediately before the one modulation period T and a first short-circuit pulse SP in the following modulation period immediately after the one modulation period T. This ensures avoidance of a singular point between adjacent modulation periods, and does not involve switching of transfer mode between adjacent modulation periods. This further reduces the number of times of switching (that is, diminishes the switching loss).

Next, an exemplary operation of the switching control according to one aspect of this embodiment will be described. FIG. 6 is a flowchart showing a main routine of exemplary switching control according to this embodiment. FIG. 7 is a flowchart showing a subroutine of an exemplary arithmetic operation for pulse width in the flowchart shown in FIG. 6.

This exemplary control is also under the assumption that the absolute value $|i_U{}^*|$ of the alternating-current side line current command value $i_U{}^*$ of the U-phase U is largest of all. In the third two-phase modulation, the alternating-current side inter-line voltage $V_{VW}$ is exemplified as having the largest absolute value, $|V_{VW}|$. In the first two-phase modulation, the alternating-current side inter-line voltage $V_{UV}$ is exemplified as having the largest absolute value, $|V_{UV}|$. In the second two-phase modulation, the alternating-current side inter-line voltage $V_{WU}$ is exemplified as having the largest absolute value, $|V_{WU}|$.

In the main routine shown in FIG. 6, at step S1, the process first moves to the subroutine shown in FIG. 7. In the subroutine, the alternating-current side line current command values $i_U{}^*$, $i_V{}^*$, $i_W{}^*$ respectively of the phases U, V, and W of the electric power converter A are subjected to arithmetic operations to obtain the pulse width of the switching pulse in each phase.

Specifically, in the subroutine shown in FIG. 7, the alternating-current side line current command values $i_U{}^*$, $i_V{}^*$, $i_W{}^*$ of the phases U, V, and W are first calculated (step S1a). The direct-current side current detecting means 17 detects the direct-current side current $i_L$ (step S1b).

Next, calculations are performed to obtain the absolute values $|i_U{}^*|$, $|i_V{}^*|$, $|i_W{}^*|$ respectively of the alternating-current side line current command values $i_U{}^*$, $i_V{}^*$, $i_W{}^*$ and to obtain the absolute value $|i_L|$ of the direct-current side current $i_L$, followed by arithmetic operations to obtain the pulse width of each of the phases U, V, and W (step S1c).

Under the assumption that the pulse widths of the alternating-current side line current command values $i_U{}^*$, $i_V{}^*$, and $i_W{}^*$ of the phases U, V, and W are respectively $T_U$, $T_V$, and $T_W$, the pulse widths $T_U$, $T_V$, and $T_W$ may be calculated by the following formulas.

$$T_U = |i_U{}^*|/|i_L|$$

$$T_V = |i_V{}^*|/|i_L|$$

Among the pulse widths $T_U$, $T_V$, and $T_W$, maximum values $[T_U, T_V, \text{ and } T_W]_{MAX}$ are assumed $T_{MAX}$, medium values $[T_U, T_V, \text{ and } T_W]_{MID}$ are assumed $T_{MID}$, and minimum values $[T_U, T_V, \text{ and } T_W]_{MIN}$ are assumed $T_{MIN}$. Under this assumption, the maximum value $T_{MAX}$, the medium value $T_{MID}$, and the minimum value $T_{MIN}$ are defined by the following equation.

$$T_{MAX} = T_{MID} + T_{MIN}$$

Referring back to the main routine shown in FIG. 6, at step S2, the inter-line voltage detecting means 18 detects the alternating-current side inter-line voltages $V_{UV}$, $V_{VW}$, and $V_{WU}$ of the electric power converter A.

Next, the absolute values $|V_{UV}|$, $|V_{VW}|$, and $|V_{WU}|$ respectively of the alternating-current side inter-line voltages $V_{UV}$, $V_{VW}$, and $V_{WU}$ are calculated. Then, a determination is made as to whether the inter-line voltage non-maximum phase, which does not correspond to any of the lines between which one of the absolute values $|V_{UV}|$, $|V_{VW}|$, and $|V_{WU}|$ is largest of all, matches or does not match the line current command value maximum phase, at which one of the absolute values $|i_U{}^*|$, $|i_V{}^*|$, and $|i_W{}^*|$ of the alternating-current side line current command values $i_U{}^*$, $i_V{}^*$, $i_W{}^*$ of the electric power converter A is largest of all (step S3).

When the determination at step S3 is to the effect that the inter-line voltage non-maximum phase and the line current command value maximum phase match one another (indicated "match" at step S3), the first switching control is executed to implement the third two-phase modulation at step S4 and step S5.

Specifically, in the third two-phase modulation (in this case, the absolute value $|V_{VW}|$ of the voltage $V_{VW}$ is largest of all), at step S4, the switching pulses ($P_V$ and $P_W$ in this case) of two (V-phase and W-phase in this case) of the phases, excluding the line current command value maximum phase (the U-phase in this case), are separated in time from one another in the one modulation period T of the pulse-width modulation. At step S5, a short-circuit pulse SP is disposed in the line current command value maximum phase (U-phase in this case, see FIG. 1).

When the determination at step S3 is to the effect that the inter-line voltage non-maximum phase and the line current command value maximum phase do not match one another (indicated "no match" at step S3), the second switching control is executed to implement the first and second two-phase modulations at step S6 and step S7.

Specifically, in the first two-phase modulation (in this case, the absolute value $|V_{UV}|$ of the voltage $V_{UV}$ is largest of all), at step S6, the switching pulses ($P_V$ and $P_W$ in this case) of two (V-phase and W-phase in this case) of the phases, excluding the line current command value maximum phase (U-phase in this case), are disposed next (continuous) in time to one another in the one modulation period T of the pulse-width modulation. At step S7, a short-circuit pulse SP is disposed in the inter-line voltage non-maximum phase (W-phase in this case, see FIG. 2(a)) or in the line current command value maximum phase (U-phase in this case, see FIG. 2(b)).

In the second two-phase modulation (in this case, the absolute value $|V_{WU}|$ of the voltage $V_{WU}$ is largest of all), at step S6, the switching pulses ($P_V$ and $P_W$ in this case) of two (V-phase and W-phase in this case) of the phases, excluding the line current command value maximum phase (U-phase in this case), are disposed next (continuous) in time to one another in the one modulation period T of the pulse-width modulation. At step S7, a short-circuit pulse SP is disposed in the inter-line voltage non-maximum phase (V-phase in this case, see FIG. 3(a)) or in the line current command value maximum phase (U-phase in this case, see FIG. 3(b)).

Next, a determination is made as to whether the alternating-current side line current command values $i_U{}^*$, $i_V{}^*$, and $i_W{}^*$ include zero (step S8).

When the determination at step S8 is to the effect that the alternating-current side line current command values $i_U{}^*$, $i_V{}^*$, and $i_W{}^*$ include zero (indicated "included" at step S8), a short-circuit pulse SP is disposed in any of the phases corresponding to at least one (both in this case) of the last short-circuit pulse SP in the previous modulation period immediately before the one modulation period T and the first short-circuit pulse SP in the following modulation period immediately after the one modulation period T (step S9). The process then moves to step S10.

When the determination at step S8 is to the effect that the alternating-current side line current command values $i_U^*$, $i_V^*$, and $i_W^*$ do not include zero (indicated "not included" at step S8), the process moves directly to step S10.

Next, the pulse pattern in the one modulation period T is adjusted into symmetry about the time axis $\gamma$ of the center of the one modulation period T (step S10). The pulse patterns thus generated is output to the electric power converter A (step S11).

At step S12, a determination is made as to whether the processing is complete. The processing through step S1 to step S12 is repeated until the completion of the processing (indicated "No" at step S12).

While the pulse pattern generating configuration according to this embodiment is applied to the electric power converter A serving as a three-phase current source inverter, the pulse pattern generating configuration also finds applications in three-phase current source converters.

Description of the Reference Numeral

| | |
|---|---|
| 10a, 10b, and 10c | three-phase current source electric power converting system |
| 13a, 13b, and 13c | Controller |
| Z | Three-phase current source inverter (exemplary three-phase current source electric power converter) |
| $P_U$ | Switching pulse of U-phase |
| $P_V$ | Switching pulse V-phase |
| $P_W$ | Switching pulse of W-phase |
| SP | Short-circuit pulse |
| T | One modulation period |
| T1 | Separation time |
| $U_P$ | Upper arm of U-phase |
| $V_P$ | Upper arm of V-phase |
| $W_P$ | Upper arm of W-phase |
| $U_N$ | Lower arm of the U-phase |
| $V_N$ | Lower arm of the V-phase |
| $W_N$ | Lower arm of the W-phase |
| U | U-phase |
| V | V-phase |
| W | W-phase |
| $V_{UV}$ | Alternating-current side inter-line voltage between U-phase and the V-phase |
| $V_{VW}$ | Alternating-current side inter-line voltage between V-phase and the W-phase |
| $V_{WU}$ | Alternating-current side inter-line voltage between W-phase and the U-phase |
| $i_L$ | Direct-current side current |
| $i_U^*$ | Alternating-current side line current command value of U-phase |
| $i_V^*$ | Alternating-current side line current command value of V-phase |
| $i_W^*$ | Alternating-current side line current command value of W-phase |
| $\gamma$ | Time axis |

**Claims**

1. A pulse pattern generating configuration for a three-phase current source electric power converter, the three-phase current source electric power converter being configured to convert electric power by pulse-width modulation and comprising phases each comprising upper and lower arms of reverse-blocking switching elements,
   wherein the three-phase current source electric power converter comprises alternating-current side inter-line voltages, and the phases comprise an inter-line voltage non-maximum phase not corresponding to any of lines between which one of the alternating-current side inter-line voltages has a largest absolute value, wherein the three-phase current source electric power converter comprises alternating-current side line current command values, and the phases comprise a line current command value maximum phase corresponding to one of the alternating-current side line current command values having a largest absolute value,
   wherein when the inter-line voltage non-maximum phase and the line current command value maximum phase match one another, first switching control is executed in one modulation period of the pulse-width modulation so as to establish a separation time to separate, in time, switching pulses of two of the phases other than the line current command value maximum phase, and so as to dispose a short-circuit pulse in the separation time in the line current command value maximum phase, and

wherein when the inter-line voltage non-maximum phase and the line current command value maximum phase do not match one another, second switching control is executed in the one modulation period of the pulse-width modulation so as to dispose the switching pulses of the two of the phases other than the line current command value maximum phase next to one another in time, and so as to dispose the short-circuit pulse in the inter-line voltage non-maximum phase or in the line current command value maximum phase such that the short-circuit pulse is next in time to the switching pulse of the inter-line voltage non-maximum phase.

2. The pulse pattern generating configuration for the three-phase current source electric power converter according to claim 1, wherein when the alternating-current side line current command values of the three-phase current source electric power converter comprise zero, the short-circuit pulse is disposed in any of the phases corresponding to at least one of a last pulse in a previous modulation period immediately before the one modulation period and a first pulse in a next modulation period immediately after the one modulation period.

3. The pulse pattern generating configuration for the three-phase current source electric power converter according to claims 1 or 2, wherein a pulse pattern in the one modulation period are symmetrical about a time axis of a center of the one modulation period.

FIG.1

FIG.2

FIG.3

FIG.4

| Commutation mode | $U_N \Leftrightarrow V_N$ (UV commutation mode) | $V_N \Leftrightarrow W_N$ (VW commutation mode) | $W_N \Leftrightarrow U_N$ (WU commutation mode) |
|---|---|---|---|
| Circuit Diagram | | | |
| Switching Loss | $|v_{UV}| \times i_L$ | $|v_{VW}| \times i_L$ | $|v_{WU}| \times i_L$ |
| First Two-Phase Modulation | At rest | ○ | ○ |
| Third Two-Phase Modulation | ○ | At rest | ○ |
| Second Two-Phase Modulation | ○ | ○ | At rest |

EP 2 485 383 A1

EP 2 485 383 A1

FIG.5

# FIG.6

```
                              ( START )
                                  │
          S1 ──  Arithmetic operations for pulse width of the
                      switching pulse of each phase
                                  │
          S2 ──  Detect alternating-current side inter-line voltages
                         Vuv, Vvw, and Vwu
                                  │
                    S3 ───
            Match          ╱ How is the relation between ╲      No match
         ┌─────────────────  the inter-line voltage non-maximum phase ──────────────┐
         │                 ╲  and the line current command value  ╱                 │
         ▼                      ╲  maximum phase?  ╱                                 ▼
  S4 ── Separate two phases other                          Dispose two phases, other than the ── S6
        than the line current command                      line current command value maximum
        value maximum phase                                phase, next to one another
         │                                                                          │
         ▼                                                                          ▼
  S5 ── Dispose a short-circuit pulse                       Dispose a short-circuit pulse in the inter-line ── S7
        in the line current command                         voltage non-maximum phase or in the line
        value maximum phase                                 current command value maximum phase
         │                                                                          │
         └──────────────────────────────┬───────────────────────────────────────────┘
                                         │
                    S8 ───
                         ╱ Zero included ╲               Not included
          ┌──────────────  in the alternating-current side line current  ──────────────┐
          │              ╲  command values?  ╱                                          │
          │                      │ Included                                             │
          ▼                      ▼                                                      │
  S9 ── Dispose a short-circuit pulse in a phase corresponding to the previous          │
        modulation cycle and/or the following modulation cycle                          │
          │                                                                             │
          └──────────────────────┬──────────────────────────────────────────────────────┘
                                 │
        S10 ──  Ensure a symmetrical pulse pattern
                                 │
        S11 ──  Output the pulse pattern
                                 │
                    S12 ───           YES
                          ╱ Complete? ╲ ──────────────── ( END )
                           ╲         ╱
                                │ NO
```

Third two-phase modulation: { S4, S5 }

First and second two-phase modulations: { S6, S7 }

EP 2 485 383 A1

FIG.7

Arithmetic operations
for pulse width                                  S1

S1a — Calculate the alternating-current side line
current command values iu*, iv*, iw*

S1b — Detect the direct-current side current iL

S1c — Arithmetic operations for pulse width of
each phase

RETURN

FIG.8

FIG.9

EP 2 485 383 A1

FIG.10

FIG.11

EP 2 485 383 A1

FIG.12

EP 2 485 383 A1

FIG.13

EP 2 485 383 A1

FIG.14

FIG.15

| Commutation mode | $U_N \Leftrightarrow V_N$<br>(UV commutation mode) | $V_N \Leftrightarrow W_N$<br>(VW commutation mode) | $W_N \Leftrightarrow U_N$<br>(WU commutation mode) |
|---|---|---|---|
| Circuit Diagram | | | |
| Switching Loss | $|V_{UV}| \times i_L$ | $|V_{VW}| \times i_L$ | $|V_{WU}| \times i_L$ |
| Three-Phase Modulation | ○ | ○ | ○ |
| First Two-Phase Modulation | At rest | ○ | ○ |
| Second Two-Phase Modulation | ○ | ○ | At rest |

**INTERNATIONAL SEARCH REPORT**

| International application No. |
| PCT/JP2010/065378 |

**A. CLASSIFICATION OF SUBJECT MATTER**
*H02M7/48(2007.01)i*

According to International Patent Classification (IPC) or to both national classification and IPC

**B. FIELDS SEARCHED**

Minimum documentation searched (classification system followed by classification symbols)
H02M7/48

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-312367 A  (Yanmar Co., Ltd.), 25 December 2008 (25.12.2008), entire text; all drawings (Family: none) | 1-3 |
| A | JP 2002-125377 A  (Sanken Electric Co., Ltd.), 26 April 2002 (26.04.2002), entire text; all drawings (Family: none) | 1-3 |
| A | JP 2001-8458 A  (Japan Atomic Energy Research Institute), 12 January 2001 (12.01.2001), entire text; all drawings (Family: none) | 1-3 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 October, 2010 (21.10.10) | 02 November, 2010 (02.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NISHIDA ; A. MAEDA.** A Simplified Discontinuous-Switching-Modulation for Three-Phase Current source PFC-Converters and Experimental Study for the Effects. *Proc. IEEE APEC '96,* 1996, vol. 2, 552-558